(19) **Europäisches Patentamt**
**European Patent Office**
**Office européen des brevets**

(11) Veröffentlichungsnummer: **0 168 684**
**B1**

(12) # EUROPÄISCHE PATENTSCHRIFT

(45) Veröffentlichungstag der Patentschrift: **25.11.87**

(51) Int. Cl.⁴: **C 08 F 216/18,** C 09 J 3/14

(21) Anmeldenummer: **85107885.7**

(22) Anmeldetag: **25.06.85**

(54) **Wasserlösliche Terpolymere, Verfahren zu deren Herstellung und Verwendung als Klebstoff.**

(30) Priorität: **26.06.84 DE 3423446**

(43) Veröffentlichungstag der Anmeldung: **22.01.86 Patentblatt 86/4**

(45) Bekanntmachung des Hinweises auf die Patenterteilung: **25.11.87 Patentblatt 87/48**

(84) Benannte Vertragsstaaten: **AT BE CH DE FR GB IT LI NL SE**

(56) Entgegenhaltungen: **FR-A-1 523 045**

(73) Patentinhaber: **BASF Aktiengesellschaft, Carl-Bosch- Strasse 38, D-6700 Ludwigshafen (DE)**

(72) Erfinder: **Straub, Ferdinand, Dr., Ziegelstrasse 20, D-6832 Hockenheim (DE)**
Erfinder: **Aydin, Oral, Dr., Sophienstrasse 14, D-6800 Mannheim 1 (DE)**
Erfinder: **Linke, Wolfgang, Dr., An der Froschlache 7, D-6700 Ludwigshafen (DE)**
Erfinder: **Schroeder, Gerd, Dr., Hardenburgstrasse 6, D-6703 Limburgerhof (DE)**
Erfinder: **Fickeisen, Peter, Dr., Hauptstrasse 45, D-6716 Dirmstein (DE)**

**EP 0 168 684 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die meisten synthetischen, wasserlöslichen Polymeren, wie Polyvinylpyrrolidon, Polyacrylamid, Polyvinylalkohol und Poly(meth)acrylsäure sind sehr spröde, weil sie sehr hohe Glasübergangstemperaturen haben. Für die Verwendung z. B. als Klebstoffe müssen sie deshalb mit Naturstoffen, wie Stärke und Dextrin kombiniert (US-PSen 4 462 838 und 4 464 202) oder mit Weichmachern (US-PS 3 345 320) klebrig gestellt werden. Bei den wasserbefeuchtbaren Klebern dient das Wasser als Weichmacher, der große Nachteil dieser Produkte besteht aber darin, daß beim abtrocknen die Klebkraft durch Versprödung des Polymeren nachläßt und die geklebten Materialien auseinandergehen. Andererseits werden wasserbefeuchtbare bzw. in Wasser gelöste Klebstoffe gewünscht, weil sie zum einen aus Gründen des Umweltschutzes keine organischen Lösungsmittel enthalten und zum anderen die Klebverbindung, falls gewünscht, mit viel Wasser wieder gelöst werden kann (Etiketten, Briefmarken). Die bisher eingesetzten Polymerisate mußten entweder aufwendig mit anderen Klebstoffen oder Weichmachern konfektioniert werden oder hatten bei Verwendung von nur Wasser als Weichmacher nach dem Abtrocknen keine Klebewirkung mehr.

Bei den Abmischungen mit Polyacrylaten gemäß der GB-PS 2 073 209 werden keine wasserlöslichen, sondern wasserresistente Kleber erhalten. Polyacrylate haben außerdem den Nachteil, daß sie beim Lagern in wäßriger Lösung zum Teil hydrolisieren, wodurch sich die Produkteigenschaften ändern. Aus der US-PS 3 345 320 sind mit Wasser anfeuchtbare Heißschmelzklebstoffe bekannt, die aus einer Mischung eines Copolymerisates aus N-Vinyllactamen und einem Vinylester oder Vinylether mit einem Weichmacher z. B. einem Polyol bestehen. Selbst wenn die N-Vinyllactam-Copolymerisate nur geringe Mengen an Vinylethern oder Vinylestern einpolymerisiert enthalten, sind sie wasserunlöslich. Eine Verstärkung der Klebkraft gegenüber den Homopolymerisaten des N-Vinyllactams ist nicht merkbar.

Aufgabe der Erfindung ist es, ein Copolymerisat auf Basis von N-Vinyllactamen oder N-Vinylcarbonsäureamiden zur Verfügung zu stellen, die ohne Zusatz anderer Produkte aus wäßriger Lösung auf Substrate, die verklebt werden sollen, aufgetragen werden können, und die auch in getrocknetem Zustand eine Klebwirkung haben.

Die Aufgabe wird erfindungsgemäß gelöst mit wasserlöslichen Terpolymeren, die

a) 10 bis 35 Gew.-% eines N-Vinyllactams oder eines N-Vinylcarbonsäureamids

b) 5 bis 20 Gew.-% Acrylsäure oder eines Salzes der Acrylsäure und

c) 80 bis 50 Gew.-% eines $C_1$- bis $C_4$-Alkyl-vinylethers

einpolymerisiert enthalten und eine Glasübergangstemperatur $T_g$ unterhalb von 60°C haben. Diese wasserlöslichen Terpolymerisate können hergestellt werden, indem man eine Monomerenmischung aus

a) 10 bis 35 Gew.-% eines N-Vinyllactams oder eines N-Vinylcarbonsäureamids,

b) 5 bis 20 Gew.-% Acrylsäure und

c) 80 bis 50 Gew.-% eines $C_1$- bis $C_4$-Alkyl-vinylethers

in einem inerten organischen Lösemittel in Gegenwart von Polymerisationsinitiatoren polymerisiert und gegebenenfalls mit Basen unter Salzbildung partiell oder vollständig neutralisiert.

Es war nicht vorherzusehen, daß man Acrylsäure mit Vinyllactamen und Vinylethern copolymerisieren kann, weil nämlich bekannt ist, daß sich sowohl Vinyllactame, wie Vinylpyrrolidon, als auch Vinylether in wäßriger Lösung unter Einwirkung schwacher Säuren zersetzen, vgl. J.Ferguson, V.S. Rajan, European Polymer Journal Vol. 15, 627, 1979, Kühn, Biret, Merkblätter Gefährliche Arbeitsstoffe V 10, V 12).

Als Komponente a) für die Herstellung der Terpolymerisate kommen N-Vinyllactame und/oder N-Vinylcarbonsäureamide in Betracht. Als N-Vinyllactame verwendet man vorzugsweise N-Vinylpyrrolidon und N-Vinylcaprolactam. Geeignete N-Vinylcarbonsäureamide leiten sich von den Säureamiden gesättigter Carbonsäuren mit 1 bis 4 Kohlenstoffatomen ab. Diese Verbindungen können mit Hilfe der allgemeinen Formel

$CH_2{=}CH—N—C—(CH2)x—H,$
| ‖
R O

in der R = H, $C_1$- bis $C_4$-Alkyl und X = 0 bis 3 bedeutet, charakterisiert werden. Verbindungen dieser Art sind z. B. N-Vinylformamid, N-Vinyl-N-methylformamid und N-Vinylacetamid.

Als Komponente b) der Monomerenmischung wird Acrylsäure eingesetzt. Die Menge an Acrylsäure in der Mischung beträgt 5 bis 20, vorzugsweise 10 bis 15 Gew.-%.

Als Komponente c) der Monomerenmischung verwendet man einen $C_1$- bis $C_4$-Alkyl-vinylether. Es ist selbstverständlich auch möglich, eine Mischung mehrerer der genannten Alkyl-vinylether einzusetzen. Bei den Alkyl-vinylethern handelt es sich um Vinyl-methylether, Vinyl-ethylether, Vinyl-n-propylether, Vinylisopropylether und Vinyl-butylether, wobei man auch hier die Isomeren, nämlich Vinyl-n-, -iso- oder tert. -butylether, einsetzen kann. Die Monomerenmischung enthält 80 bis 50 Gew.-% Vinyl-alkylether. Die wasserlöslichen Terpolymeren werden durch Polymerisieren der Monomerenmischung a), b) und c) in einem inerten organischen Lösemittel in Gegenwart von Polymerisationsinitiatoren hergestellt. Man kann die Polymerisation beispielsweise nach Art einer Lösungspolymerisation in einem einwertigen gesättigten $C_1$- bis $C_4$-Alkohol, oder cyclischen Ethern, wie Tetrahydrofuran oder Dioxan oder auch in Lösemittelmischungen herstellen. Die Feststoffkonzentration an Polymerisat kann in einem weiten Bereich variiert werden, z. B. kann man 1 %ige bis 60 gew.-%ige Lösungen des Terpolymeren in den genannten Lösemitteln herstellen.

Die Polymerisation der Monomeren kann jedoch auch nach Art einer Fällungspolymerisation vorgenommen werden. Als Lösemittel für die Monomeren verwendet man dafür beispielsweise Ester aus gesättigten $C_1$-bis $C_4$-Carbonsäuren und einwertigen, gesättigten $C_1$- bis $C_8$-Alkoholen, Ethern, Ketonen oder chlorierten Kohlenwasserstoffen. Der Wassergehalt der Lösemittel kann in den Fällen, in denen die Polymerisationsgeschwindigkeit größer als die Zersetzungsgeschwindigkeit der N-Vinyllactame ist, bis zu 15 Gew.-% betragen. Es ist jedoch im allgemeinen vorteilhaft, wenn der Wassergehalt des Lösemittels für die Monomeren unter 1 Gew.-% liegt. Vorzugsweise führt man die Polymerisation in einem wasserfreien, inerten organischen Lösemittel durch und stellt Terpolymere aus N-Vinylpyrrolidon, Acrylsäure und einem $C_1$- bis $C_4$-Alkyl-vinylether nach dem Verfahren der Lösungspolymerisation in einem einwertigen gesättigten Alkohol (d.h. einem Alkanol), Dioxan oder Tetrahydrofuran her. Der K-Wert der Polymerisate liegt meist im Bereich von 10 bis 100. Die Terpolymeren haben eine Glasübergangstemperatur $T_g$ unterhalb von 60°C. Die Glastemperatur wird nach der Differential-Thermo-Analyse (DTA) bestimmt, vgl. B. Vollmert, Grundriß der Makromolekularen Chemie, E. Vollmert-Verlag, Karlsruhe 1979, Band 4, Seite 150.

Die Polymerisation erfolgt in Gegenwart der üblichen Initiatoren, z. B. Azo-Inititoren, wie Azo-bisisobutyronitril, Diacylperoxiden, Perestern und Dialkylperoxiden. Ebenso ist es möglich, die bekannten Redox-Katalysatoren einzusetzen. Die Polymerisation kann gegebenenfalls in Gegenwart von Polymerisationsreglern durchgeführt werden. Die Polymerisation erfolgt meist im Temperaturbereich von 20 bis 150°C, vorzugsweise bei Normaldruck, kann jedoch auch unter vermindertem Druck oder unter erhöhtem Druck vorgenommen werden.

Im Anschluß an die Polymerisation erfolgt gegebenenfalls eine Neutralisation der Terpolymeren. Die Neutralisation kann z. B. gleichzeitig mit dem Abdestillieren des Lösemittels unter Zugabe einer Base durchgeführt werden. Vorzugsweise wendet man zum Abdestillieren der Lösemittel die Wasserdampfdestillation an. Als Basen kommen Ammoniak, Alkalihydroxide, Erdalkalihydroxide, Alkalicarbonate und Hydrogencarbonate sowie Erdalkalicarbonate und Oxide in Betracht. Vorzugsweise verwendet man zum Neutralisieren Ammoniak, Natronlauge und Kalilauge.

Zum Neutralisieren der Terpolymeren kann man auch Amine verwenden, z. B. Methylamin, Ethylamin, Trimethylamin, Butylamin, Ethanolamin und Polyethylenimin. Die Terpolymeren werden meist mindestens zu 10 % bis zu 100 % neutralisiert. Je nach Neutralisationsgrad erhält man klare bis transparente wäßrige Lösungen. Die Fällungspolymerisate können durch Behandlung mit wäßrigen Basen in eine wäßrige Lösung überführt werden. In einem Liter Wasser lösen sich mindestens 50 g des Terpolymeren. Die Terpolymeren können entweder als Klebstoffrohstoff, oder in Form einer wäßrigen Lösung direkt als Klebstoff verwendet werden.

Die in den Beispielen angegebenen Teile sind Gewichtsteile, die Angaben in Prozent beziehen sich auf das Gewicht der eingesetzten Stoffe. Die K-Werte wurden nach H. Fikentscher, Cellulosechemie 13, 58-64, 71 bis 74 (1932), bei einer Temperatur von 20°C in vollständig entsalztem Wasser bestimmt; dabei bedeutet $K = k.10^3$.

Die Glastemperaturen wurden nach der Differential-Thermo-Analyse (DTA) ermittelt, vgl. B. Vollmert, Grundriß der Makromolekularen Chemie, E. Vollmert-Verlag, Karlsruhe 1979, Band 4, Seite 150.

**Beispiel 1**

In einem Kolben, der mit einem Rührer, Rückflußkühler und drei Tropftrichtern ausgestattet war, wurde ein Terpolymer aus N-Vinylpyrrolidon, Acrylsäure und Vinylisobutylether hergestellt. Aus dem Tropftrichter I wurde eine Mischung von 142 Teilen N-Vinylpyrrolidon, 48 Teilen Acrylsäure und 80 Teilen tert.-Butanol aus dem Tropftrichter II eine Mischung von 285 Teilen Vinyl-isobutylether und 80 Teilen tert.-Butanol im Verlauf von 5 Stunden kontinuierlich in den Kolben getropft. Mit Beginn der Monomerenzugabe fügte man aus dem Tropftrichter III im Verlauf won 6 Stunden insgesamt 5 Teile tert.-Butylperpivalat in 100 Teilen tert.-Butanol zu. Das tert.-Butanol war wasserfrei. Die Polymerisationstemperatur wurde auf 75°C gehalten. Um die Viskosität des entstehenden Reaktionsprodukts zu erniedrigen kann man weiteres Lösemittel zufügen.

Nach Beendigung der Initiatorzugabe wurde das Reaktionsgemisch noch 60 Minuten bei einer Temperatur von 82°C gehalten und anschließend unter Einleiten von Wasserdampf vom Lösemittel befreit, wobei gleichzeitig mit dem Einleiten von Wasserdampf aus einem Tropftrichter eine 10 %ige wäßrige Natronlauge zudosiert wurde. Nachdem das gesamte Lösemittel abdestilliert war (Übergangstemperatur 98°C), wurde das Terpolymere mit Wasser verdünnt und die wäßrige Lösung abgekühlt. Das Terpolymere hatte einen K-Wert von 32 und eine Glasübergangstemperatur $T_g$ von 30°C.

**Beispiele 2 bis 8**

Nach der im Beispiel 1 gegebenen Vorschrift wurden die in der folgenden Tabelle angegebenen Monomeren in dem jeweils in der Tabelle angegebenen Lösemittel polymerisiert. Die verwendeten Lösemittel waren wasserfrei. In der Tabelle sind die K-Werte und die Glastemperaturen der Terpolymeren angegeben.

| Beispiel | Lösemittel | Vinyl-pyrrolidon | Acrylsäure | Vinyl-methylether | Vinyl-ethylether | Vinyl-butylether | K-Wert | $T_g$ [°C] |
|---|---|---|---|---|---|---|---|---|
| 2 | Isopropanol | 150 | 100 | - | - | 250 | 16 | 46 |
| 3 | Ethanol | 100 | 100 | 300 | - | - | 28 | 37 |
| 4 | tert.-Butanol | 100 | 50 | - | - | 350 | 46 | 7 |
| 5 | Ethanol | 50 | 100 | - | 350 | - | 24 | 17 |
| 6 | tert.-Butanol | 50 | 100 | 250 | 50 | - | 35 | 15 |
| 7 | Tetrahydrofuran | 150 | 100 | - | - | 250 | 22 | 46 |
| 8 | Dioxan | 100 | 50 | - | 350 | - | 29 | 23 |

Die in der Tabelle angegebenen Terpolymeren können als Klebstoffrohstoff zur Herstellung von Klebern verwendet werden, die zum Verkleben von Papier geeignet sind.

**Patentansprüche**

1. Wasserlösliche Terpolymere, die
(a) 10 bis 35 Gew.-% eines N-Vinyllactams oder eines N-Vinylcarbonsäureamids,
(b) 5 bis 20 Gew.-% Acrylsäure oder eines Salzes der Acrylsäure und
(c) 80 bis 50 Gew.-% eines $C_1$- bis $C_4$-Alkyl-vinylethers
einpolymerisiert enthalten und eine Glasübergangstemperatur $T_g$ unterhalb von 60°C haben.

2. Verfahren zur Herstellung von wasserlöslichen Terpolymeren nach Anspruch 1, dadurch gekennzeichnet, daß man eine Monomerenmischung aus
(a) 10 bis 35 Gew.-% eines N-Vinyllactams oder eines N-Vinylcarbonsäureamids,
(b) 5 bis 20 Gew.-% Acrylsäure und
(c) 80 bis 50 Gew.-% eines $C_1$- bis $C_4$-Alkyl-vinylethers
in einem inerten organischen Lösemittel in Gegenwart von Polymerisationsinitiatoren polymerisiert und gegebenenfalls mit Basen unter Salzbildung partiell oder vollständig neutralisiert.

3. Verfahren nach Anspruch 2, dadurch gekennzeichnet, daß man die Monomeren in einem einwertigen, gesättigten $C_1$- bis $C_4$-Alkohol, Tetrahydrofuran, Dioxan oder deren Mischungen nach Art einer Lösungspolymerisation polymerisiert.

4. Verfahren nach Anspruch 2, dadurch gekennzeichnet, daß man die Monomeren nach Art einer Fällungspolymerisation in Estern aus gesättigten $C_1$- bis $C_4$-Carbonsäuren und einwertigen gesättigten $C_1$- bis $C_8$-Alkoholen, Ethern, Ketonen oder chlorierten Kohlenwasserstoffen polymerisiert.

5. Verfahren nach den Ansprüchen 2 bis 4, dadurch gekennzeichnet, daß der Wassergehalt des Lösemittels unter 1 Gew.-% liegt.

6. Verfahren nach den Ansprüchen 2 bis 4, dadurch gekennzeichnet, daß man in einem wasserfreien, inerten, organischen Lösemittel polymerisiert.

7. Verwendung der wasserlöslichen Terpolymeren nach Anspruch 1 als Klebstoffrohstoff.

8. Verwendung der wasserlöslichen Terpolymeren nach Anspruch 1 in Form einer wäßrigen Lösung als Klebstoff.

**Claims**

1. A water-soluble terpolymer which contains, as copolymerized units,
(a) from 10 to 35 % by weight of an N-vinyllactam or an n-vinyl carboxylic acid amide,
(b) from 5 to 20 % by weight of acrylic acid or of a salt of acrylic acid, and
(c) from 80 to 50 % by weight of a $C_1$-$C_4$-alkyl vinyl ether, and which has a glass transition temperature $T_g$ below 60°C.

2. A process for the preparation of a water-soluble terpolymer, wherein a monomer mixture of
(a) from 10 to 35 % by weight of an N-vinyllactam or an N-vinyl carboxylic acid amide,
(b) from 5 to 20 % by weight of acrylic acid, and
(c) from 80 to 50 % by weight of a $C_1$-$C_4$-alkyl vinyl ether, is polymerized in an inert organic solvent in the presence of a polymerization initiator and, if desired, the product is partially or completely neutralized with a base, so as to form a salt.

3. A process as claimed in claim 2, wherein the monomers are polymerized in the manner of a solution polymerization in a monohydric saturated $C_1$-$C_4$-alcohol, tetrahydrofuran, dioxane or a mixture of these.

4. A process as claimed in claim 2, wherein the monomers are polymerized in the manner of a precipitation polymerization in an ester of a saturated $C_1$-$C_4$-carboxylic acid and a monohydric saturated $C_1$-$C_8$-alcohol, an ether, ketone or a chlorohydrocarbon.

5. A process as claimed in claims 2 to 4, wherein the water content of the solvent is less than 1 % by weight.

6. A process as claimed in claims 2 to 4, wherein the polymerization is carried out in an anhydrous, inert, organic solvent.

7. The use of a water-soluble terpolymer as claimed in claim 1 as a raw material for adhesives.

8. The use of a water-soluble terpolymer as claimed in claim 1 in the form of an aqueous solution as an adhesive.

**Revendications**

1. Terpolymères hydrosolubles, dans lesquels sont copolymérisés
(a) 10 à 35 % en poids d'une N-vinyl-lactame ou d'un amide d'un acide N-vinyl-carboxylique,
(b) 5 à 20 % en poids d'acide acrylique ou d'un acrylate et
(c) 80 à 50 % en poids d'un éther alkyl (en $C_1$ à $C_4$)-vinylique
et dont la température de transition vitreuse $T_g$ est inférieure à 60° C.

2. Procédé de préparation de terpolymères hydrosolubles suivant la revendication 1, caractérisé en ce que l'on polymérise un mélange de monomères constitué de
(a) 10 à 35 % en poids d'une N-vinyl-lactame ou d'un amide d'un acide N-vinyl-carboxylique,
(b) 5 à 20 % en poids d'acide acrylique et
(c) 80 à 50 % en poids d'un éther alkyl(en $C_1$ à $C_4$)-vinylique
dans un solvant organique inerte en présence d'amorceurs de la polymérisation, puis on neutralise partiellement ou complètement à l'aide de bases avec formation de sel(s).

3. Procédé suivant la revendication 2, caractérisé en ce que l'on polymérise les monomères à l'instar d'une polymérisation en solution dans un alcool monovalent saturé en $C_1$ à $C_4$, le tétrahydrofuranne ou le dioxanne ou un mélange de ceux-ci.

4. Procédé suivant la revendication 2, caractérisé en ce que l'on polymérise les monomères à l'instar d'une polymérisation par précipitation dans des esters d'acides carboxyliques saturés en $C_1$ à $C_4$ et d'alcools monovalents saturés en $C_1$ à $C_8$, des éthers, des cétones ou des hydrocarbures chlorés.

5. Procédé suivant les revendications 2 à 4, caractérisé en ce que le solvant possède une teneur en eau inférieure à 1 % en poids.

6. Procédé suivant les revendications 2 a 4, caractérisé en ce que la polymérisation est réalisée dans un solvant organique inerte anhydre.

7. Utilisation des terpolymères hydrosolubles suivant la revendication 1 comme bases pour compositions adhésives.

8. Utilisation des terpolymères hydrosolubles suivant la revendication 1 en solution aqueuse comme adhésifs.